Europäisches Patentamt

European Patent Office

Office européen des brevets

(19)

(11) Veröffentlichungsnummer : **0 164 140**
**B1**

(12)                    **EUROPÄISCHE PATENTSCHRIFT**

(45) Veröffentlichungstag der Patentschrift :
07.03.90

(51) Int. Cl.⁵ : **C 01 B 17/02, B 01 D 19/00**

(21) Anmeldenummer : 85200519.8

(22) Anmeldetag : 04.04.85

(54) **Verfahren und Vorrichtung zum Entgasen von schwefelwasserstoffhaltigem flüssigem Schwefel.**

(30) Priorität : 10.05.84 DE 3417230

(43) Veröffentlichungstag der Anmeldung :
11.12.85 Patentblatt 85/50

(45) Bekanntmachung des Hinweises auf die Patenterteilung : 07.03.90 Patentblatt 90/10

(84) Benannte Vertragsstaaten :
AT BE DE FR NL

(56) Entgegenhaltungen :
DE--A-- 2 221 022
FR--A-- 2 440 336
GB--A-- 1 402 274
US--A-- 2 718 275
US--A-- 3 364 655

(73) Patentinhaber : METALLGESELLSCHAFT AG
Reuterweg 14 Postfach 3724
D-6000 Frankfurt/M.1 (DE)

(72) Erfinder : Fischer, Herbert
Holzmühlenweg 67
D-6304 Lollar (DE)
Erfinder : Kriebel, Manfred, Dr.
Tiroler Strasse 61
D-6000 Frankfurt 70 (DE)

(74) Vertreter : Rieger, Harald, Dr.
Reuterweg 14
D-6000 Frankfurt am Main (DE)

EP 0 164 140 B1

Jouve, 18, rue St-Denis, 75001 Paris, France

**Beschreibung**

Die Erfindung betrifft ein Verfahren zum Entgasen von schwefelwasserstoffhaltigem flüssigem Schwefel durch Versprühen des mit einem Entgasungsbeschleuniger versetzten Schwefels und Abführen der freigesetzten $H_2S$-reichen Gase, sowie eine Vorrichtung hierzu.

Die Entgasung von $H_2S$-haltigem flüssigem Schwefel ist in der DE-C-15 67 791 und der GB-A-1 433 822 beschrieben. Bei den bekannten Verfahren und Vorrichtungen geht es darum, flüssigen Schwefel aus Schwefelgewinnungs-Anlagen nach dem Claus-Verfahren zu behandeln. Dieser flüssige Schwefel enthält Schwefelwasserstoff und Polysulfide ($H_2S_x$). Wird dieser Schwefel flüssig transportiert, besteht die Gefahr, daß sich im Gasraum des Transportfahrzeugs eine $H_2S$-haltige Atmosphäre aufbaut, die zu explosiven Gemischen führen kann. Insbesondere kann durch Verwenden von Stahlbehältern pyrophores Eisen entstehen, das eine Explosion begünstigt. Es ist deshalb notwendig, den flüssigen Schwefel, der heiß aus der Claus-Anlage kommt, weitestgehend zu entgasen.

Beim bekannten Verfahren der DE-C-15 67 791 wird der flüssige Schwefel bei Temperaturen von 125 bis 145 °C versprüht. Dem zu versprühenden Schwefel war zuvor Ammoniak als Entgasungsbeschleuniger zugesetzt worden. Der Entgasungsbeschleuniger sorgt vor allem für die Umwandlung der Polysulfide in flüchtigen Schwefelwasserstoff. Der GB-A-1 433 822 entsprechend kommen als Entgasungsbeschleuniger auch Luft oder Diäthanolamin in Frage. Das Verfahren der britischen Patentschrift arbeitet mit einem Behälter mit zwei Kammern, in welchem der behandelte Schwefel über einen Überlauf von der ersten in die zweite Kammer gelangt.

Der Erfindung liegt die Aufgabe zugrunde, die Entgasung des flüssigen Schwefels auf kostengünstige Weise in einem Stahlbehälter durchzuführen und dabei dennoch die durch die Anwesenheit von pyrophorem Eisen gegebene Explosionsgefahr mit Sicherheit ausschließen zu können. Gleichzeitig soll auch ein unerwünschter Temperaturanstieg im zu behandelnden flüssigen Schwefel vermieden werden. Beim eingangs genannten Verfahren geschieht dies erfindungsgemäß dadurch, daß man die Entgasung in einem Stahlbehälter mit mindestens zwei miteinander verbundenen, Gasräume über dem flüssigen Schwefel aufweisenden Kammern durchführt, den Schwefel durch die hintereinander geschalteten Kammern leitet, daß man der den Schwefelzulauf aufweisenden ersten Kammer Schwefel mit Temperaturen im Bereich von 140 bis 160 °C zuführt, aus der zweiten Kammer Schwefel abzieht, außerhalb des Behälters auf Temperaturen von 120 bis 135 °C kühlt und den gekühlten flüssigen Schwefel in die erste Kammer in deren Gasraum versprüht, die Gasräume der Kammern mit einem sauerstofffreien Inertgas spült, das man über der ersten Kammer aus dem Behälter abzieht, und daß man die Verweilzeit des Schwefels im Behälter auf 12 bis 32 Stunden einstellt. Auf diese Weise kann man den restlichen Gehalt an $H_2S$ und $H_2S_x$ auf höchstens 10 ppm absenken. Diese und alle nachfolgenden ppm-Angaben beziehen sich auf Gewichts-ppm, sofern nichts anderes angegeben ist. Bei diesem niedrigen Restgehalt an $H_2S$ und $H_2S_x$ besteht keine Entzündungs- oder Explosionsgefahr mehr, auch entfällt eine Geruchsbelästigung durch $H_2S$, der aus gelagertem flüssigem Schwefel aufsteigt.

Zweckmäßigerweise stellt man die Verweilzeit des Schwefels im Behälter auf etwa 18 bis 26 Stunden ein. Als Inertgas verwendet man vorzugsweise ein zu 40 bis 100 Vol.% aus Stickstoff bestehendes Gas. Ein solches Inertgas ist z. B. das Abgas, das nach einer Claus-Anlage anfällt. Dieses Abgas enthält neben Stickstoff noch $CO_2$ und $H_2O$ und ist sauerstofffrei. Natürlich kann als Inertgas auch Stickstoff oder $CO_2$ verwendet werden. Es ist bereits bekannt, als Entgasungsbeschleuniger Ammoniak, Luft oder Amine einzusetzen. Die Dosierung des flüssigen Schwefels mit dem Entgasungsbeschleuniger beträgt bei Ammoniak etwa 5 bis 50 ppm, vorzugsweise 5 bis 10 ppm, beim Verwenden von Luft 10 bis 200 ppm, vorzugsweise 20 bis 50 ppm, und beim Einsatz von Aminen etwa 10 bis 60 ppm.

Ein wichtiger Aspekt des erfindungsgemäßen Verfahrens ist in der Verwendung eines Kühlers für den aus der zweiten Kammer angesaugten flüssigen Schwefel, der in die erste Kammer hinein versprüht wird, zu sehen. Dieser Kühler, der sich bewußt außerhalb des Entgasungsbehälters befindet, verwendet als Kühlmedium z. B. Wasser. Der Kühler sorgt dafür, daß der in die erste Kammer hinein versprühte Schwefel eine konstante Temperatur im Bereich von 120 bis 135 °C und vorzugsweise von 122 bis 125 °C hat. Diese Temperaturen liegen unmittelbar über der Schmelztemperatur des Schwefels, wo die Viskosität des Schwefels sehr niedrig ist. Dadurch läßt sich der Schwefel beim Versprühen fein zerteilen, was die Entgasung verbessert. Durch die Kühlung wird die Temperatur des Schwefels im Behälter im Bereich von 120 bis 140 °C gehalten und ein Temperaturanstieg darüber hinaus mit Sicherheit vermieden.

Der zu entgasende Schwefel, der üblicherweise aus einer Claus-Anlage kommt und beim Eintritt in den Entgasungsbehälter etwa Temperaturen im Bereich von 140 bis 160 °C aufweist, kühlt nämlich im Entgasungsbehälter von selbst nicht ab und erfährt dort eher noch eine Temperaturerhöhung. Mit ansteigender Temperatur nimmt jedoch die Viskosität des Schwefels zu, und oberhalb von 160 °C ist der Schwefel so zäh, daß er nicht mehr gepumpt werden kann. Der außerhalb des Entgasungsbehälters liegende Kühler verhindert einen solchen Temperaturanstieg und kann gleichzeitig noch zur Dampferzeugung genutzt werden.

Es empfiehlt sich, den Schwefel während der Verweilzeit im Behälter etwa 30 bis 50 mal abzuziehen und zu versprühen. Bei einer besonders vorteilhaften Ausgestaltung der Erfindung ist dies besonders leicht möglich. Hierbei führt man die Entgasung in einem drei hintereinandergeschaltete Kammern aufweisenden Behälter durch. Dabei wird nunmehr auch aus der dritten Kammer Schwefel abgezogen und dieser Schwefel im Gasraum der zweiten Kammer versprüht. Für eine besonders intensive Entgasung empfiehlt es sich, auch dem flüssigen Schwefel der dritten Kammer Entgasungsbeschleuniger zuzusetzen.

Die Vorrichtung zum Durchführen des erfindungsgemäßen Verfahrens weist einen Stahlbehälter mit zwei oder drei Kammern auf. Jede Kammer besitzt einen über der Flüssigkeit befindlichen Gasraum, wobei benachbarte Gasräume miteinander verbunden sind.

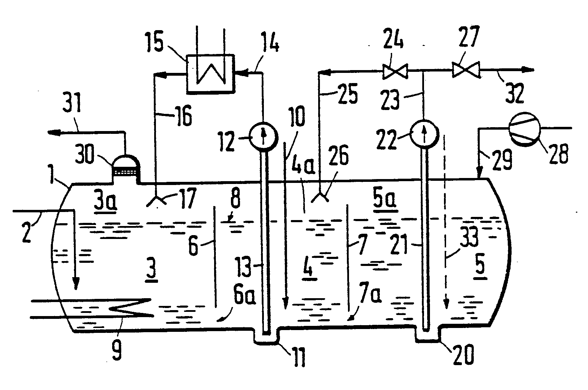

Ausgestaltungen des Verfahrens und der Vorrichtung werden mit Hilfe der Zeichnung erläutert, die in schematischer Darstellung einen Entgasungsbehälter mit drei Kammern zeigt.

Dem aus Stahl gefertigten Entgasungsbehälter 1 wird durch die Leitung 2 flüssiger Schwefel, der $H_2S$ und $H_2S_x$ enthält, z. B. aus einer Claus-Anlage zugeführt. Der Behälter weist drei Kammern 3, 4 und 5 auf. Die Kammern werden durch die Trennwände 6 und 7 gebildet. Im Behälter 1 liegt der Flüssigkeitsspiegel 8 niedriger als die Oberkanten der Trennwände 6 und 7, der Durchfluß zwischen benachbarten Kammern wird durch eine untere Öffnung 6a bzw. 7a in jeder Trennwand hergestellt. Durch mehrere Heizregister 9, von denen in der Zeichnung nur eines dargestellt ist, wird der Schwefel flüssig gehalten.

Dem Schwefel in der mittleren Kammer 4 wird durch die Leitung 10 Entgasungsbeschleuniger zudosiert. In der gleichen Kammer saugt man aus einem Pumpensumpf 11 mit Hilfe der pumpe 12 durch das Steigrohr 13 flüssigen Schwefel an, der in der Leitung 14 zu einem Kühler 15 geführt wird. Im Kühler 15 verwendet man als Kühlmedium zweckmäßigerweise Wasser, wobei Dampf von etwa 2 bar entsteht. Der Kühler sorgt dafür, daß der in der Leitung 16 zur Sprüheinrichtung 17 geführte flüssige Schwefel Temperaturen im Bereich von 120 bis 135 °C und vorzugsweise von 122 bis 125 °C aufweist. Die Temperatur, mit der der Schwefel versprüht wird, liegt nur wenig über der Schmelztemperatur, wobei der Schwefel eine ziemlich niedrige Viskosität aufweist.

Die Sprüheinrichtung 17 befindet sich im Gasraum 3a der Kammer 3 über dem Flüssigkeitsspiegel 8. Freigesetzter Schwefelwasserstoff sammelt sich in diesem Gasraum 3a, während der Schwefel sich mit der Flüssigkeit vermischt.

Durch die Öffnung 6a in der Wand 6 fließt Schwefel aus der Kammer 3 der Kammer 4 zu, und von dort gelangt der Schwefel durch die Öffnung 7a in die Kammer 5. Die Trennwände 6 und 7 sorgen dafür, daß eine Rückvermischung des Schwefels der Kammer 5 mit dem der Kammer 4 bzw. von Schwefel der Kammer 4 mit dem der Kammer 3 praktisch nicht stattfindet. Dadurch wird die größtmögliche Reinheit des schließlich abgezogenen Schwefels erreicht.

Die Kammer 5 weist den Pumpensumpf 20 auf, aus welchem über das Steigrohr 21 unter der Wirkung der Pumpe 22 Schwefel durch die Leitung 23, das geöffnete Ventil 24 und durch die Leitung 25 zur Sprüheinrichtung 26 gedrückt wird. Damit erfolgt nunmehr auch eine Umwälzung des Schwefels zwischen den Kammern 4 und 5. Während dieser Umwälzung ist das Ventil 27 geschlossen. Die Sprüheinrichtung 26 befindet sich im Gasraum 4a der Kammer 4, dieser Gasraum steht mit dem Gasraum 3a in Verbindung. Zum Ausspülen der sich in den Gasräumen ansammelnden Gase leitet man Inertgas über ein Gebläse 28 und die Leitung 29 zunächst in den Gasraum 5a der Kammer 5 und drückt die Gase der Gasräume 5a, 4a, und 3a durch den Tröpfenabscheider 30 in die Gasableitung 31. Die Leitung 31 steht zweckmäßigerweise mit einer Nachverbrennung in Verbindung, wie sie üblicherweise zur Claus-Anlage gehört. Auch kann das in der Leitung 29 herangeführte Inertgas ein Abgas der Claus-Anlage sein.

Der Abzug des entgasten flüssigen Schwefels erfolgt bei der in der Zeichnung dargestellten Ausführungsform chargenweise durch die Ableitung 32 bei geöffnetem Ventil 27 und gleichzeitig geschlossenem Ventil 24 mit Hilfe der bereits erwähnten Förderpumpe 22. Will man eine besonders starke Entgasung des flüssigen Schwefels erreichen, kann es empfehlenswert sein, während der Phase des Aussprühens von Schwefel durch die Sprüheinrichtung 26 bei geöffnetem Ventil 24 und geschlossenem Ventil 27 zusätzlich Entgasungsbeschleuniger durch die gestrichelt gezeichnete Leitung 33 zuzudosieren. Im allgemeinen wird dies aber nicht erforderlich sein.

Beispiel :

Zu einer Claus-Anlage, die täglich 125 t flüssigen Schwefel erzeugt, gehört eine Entgasungsvorrichtung, wie sie in der Zeichnung dargestellt ist. Der aus Stahl gefertigte zylindrische Entgasungsbehälter 1 hat eine Länge von 15 m und einen Durchmesser von 3,2 m. Die maximale Höhe des flüssigen Schwefels im Behälter ist auf 2,5 m begrenzt. Die Pumpen 12 und 22 fördern jeweils 100 m³/h, so daß der Inhalt des Behälters 1 34-fach umgewälzt und eine Verweilzeit des Schwefels im Behälter 1 von 24 Stunden erreicht wird. Die Temperatur des Schwefels im Behälter 1 wird durch den Kühler 15 auf 130 °C gehalten Als Entgasungsbeschleuniger gibt man durch die Leitung 10 pro Stunde 30 g $NH_3$ zu, die Leitung 33 wird nicht benutzt. Zum Durchspülen der Gasräume 5a, 4a und 3a dienen 100 m³/h Stickstoff aus der Leitung 29.

## Patentansprüche

1. Verfahren zum Entgasen von schwefelwasserstoffhaltigem flüssigem Schwefel durch Versprühen des mit einem Entgasungsbeschleuniger versetzten Schwefels und Abführen der freigesetzten H₂S-reichen Gase, dadurch gekennzeichnet, daß man die Entgasung in einem Stahlbehälter mit mindestens zwei miteinander verbundenen, Gasräume über dem flüssigen Schwefel aufweisenden Kammern durchführt, den Schwefel durch die hintereinandergeschalteten Kammern leitet, daß man der den Schwefelzulauf aufweisenden ersten Kammer Schwefel mit Temperaturen im Bereich von 140 bis 160 °C zuführt, aus der zweiten Kammer Schwefel abzieht, außerhalb des Behälters auf Temperaturen von 120 bis 135 °C kühlt und den gekühlten flüssigen Schwefel in die erste Kammer in deren Gasraum versprüht, die Gasräume der Kammern mit einem sauerstoffreien Inertgas spült, das man über der ersten Kammer aus dem Behälter abzieht, und daß man die Verweilzeit des Schwefels im Behälter auf 12 bis 32 Stunden einstellt.

2. Verfahren nach Anspruch 1, dadurch gekennzeichnet, daß man die Verweilzeit des Schwefels im Behälter auf 18 bis 26 Stunden einstellt.

3. Verfahren nach Anspruch 1 oder 2, dadurch gekennzeichnet, daß man als Inertgas ein zu 40 bis 100 Vol.% aus Stickstoff bestehendes Gas verwendet.

4. Verfahren nach Anspruch 1 oder einem der folgenden, dadurch gekennzeichnet, daß man als Entgasungsbeschleuniger Ammoniak, Luft oder Amine verwendet.

5. Verfahren nach Anspruch 1 oder einem der folgenden, dadurch gekennzeichnet, daß man die Entgasung in einem drei hintereinandergeschaltete Kammern aufweisenden Behälter durchführt, wobei aus der zweiten Kammer abgezogener Schwefel außerhab des Behälters gekühlt und mit Temperaturen von 120 bis 135 °C im Gasraum der ersten Kammer versprüht wird und man in der dritten Kammer abgezogenen Schwefel im Gasraum der zweiten Kammer versprüht.

6. Verfahren nach Anspruch 5, dadurch gekennzeichnet, daß man auch dem flüssigen Schwefel der dritten Kammer Entgasungsbeschleuniger zugibt.

7. Verfahren nach Anspruch 1 oder einem der folgenden, dadurch gekennzeichnet, daß der Schwefel während der Verweilzeit im Berhälter etwa 30 bis 50 mal abgezogen und versprüht wird.

8. Vorrichtung zum Entgasen von schwefelwasserstoffhaltigem flüssigem Schwefel durch Versprühen des mit einem Entgasungsbeschleuniger versetzten Schwefels und Abführen der H₂S-reichen Gase, gekennzeichnet durch einen Stahlbehälter mit mindestens zwei Kammern, Gasräumen über der Flüssigkeit dieser Kammern, einer Pumpe zum Abziehen des Schwefels aus der zweiten Kammer, einer Kühlvorrichtung für den abgezogenen Schwefel außerhalb des Behälters, einer Sprüheinrichtung im Gasraum der ersten Kammer zum Versprühen des von der Kühlvorrichtung kommenden Schwefels und mit mindestens einer Zu- und Ableitung für Inertgas zum Abführen freigesetzter H₂S-reicher Gase aus den Gasräumen nach außen.

9. Vorrichtung nach Anspruch 8, dadurch gekennzeichnet, daß der Behälter drei Kammern aufweist und im Gasraum der zweiten Kammer eine Sprüheinrichtung zum Versprühen von Schwefel aus der dritten Kammer angeordnet ist.

## Claims

1. A process of degasifying liquid sulphur which contains hydrogen sulphide in that the sulphur, to which a degasification accelerator has been added, is sprayed and the high-H₂S gases which have been released are withdrawn, characterized in that the degasification is effected in a steel vessel, which contains at least two interconnected chambers, in which gas spaces are disposed over the liquid sulphur, the sulphur is passed through the series-connected chambers, sulphur at temperatures in the range from 140 to 160 °C is supplied to the first chamber, which is provided with the sulphur inlet, sulphur is withdrawn from the second chamber and is cooled to temperatures from 120 to 135 °C outside the vessel and the cooled liquid sulphur is sprayed in the first chamber into the gas space thereof, the gas spaces of the chambers are purged with an oxygen-free inert gas, which is withdrawn from the vessel over the first chamber, and the residence time of the sulphur in the vessel is adjusted to 12 to 32 hours.

2. A process according to claim 1, characterized in that the residence time of the sulphur is adjusted to 18 to 26 hours.

3. A process according to claim 1 or 2, characterized in that a gas which comprises 40 to 100 % by volume nitrogen is used as an inert gas.

4. A process according to claim 1 or any of the following claims, characterized in that ammonia, air or amines is or are used as a degasification accelerator.

5. A process according to claim 1 or any of the following claims, characterized in that the degasification is performed in a vessel having three series-connected chambers, sulphur which has been withdrawn from the second chamber is cooled outside the vessel and at temperatures from 120 to 135 °C is sprayed in the gas space of the first chamber and sulphur which has been withdrawn from the third chamber is sprayed in the gas space of the second chamber.

6. A process according to claim 5, characterized in that degasification accelerator is added also to the liquid sulphur in the third chamber.

7. A process according to claim 1 or any of the following claims, characterized in that the sulphur is withdrawn and sprayed about 30 to 50 times during the residence time of the sulphur in the container.

8. An apparatus for degasifying liquid sulphur which contains hydrogen sulphide in that the sulphur, to which a degasification accelerator has been added, is sprayed and the high-H₂S gases which have been released are withdrawn, characterized by a steel vessel having at least two chambers, gas spaces over the liquid in said chambers, a pump for withdrawing the sulphur from the second chamber, cooling means for the withdrawn sulphur outside the vessel, spraying means disposed in the gas space of the first chamber and serving to spray the sulphur coming from the cooling means, and at least one supply and discharge line for inert gas for withdrawing released high-$H_2S$ gases from the gas spaces to the outside.

9. An apparatus according to claim 8, characterized in that the vessel comprises three chambers and spraying means for spraying sulphur from the third chamber are disposed in the gas space of the second chamber.

**Revendications**

1. Procédé de dégazage de soufre liquide contenant du sulfure d'hydrogéne, par pulvérisation du soufre mélangé à un accélérateur de dégazage et par évacuation des gaz dégagés riches en $H_2S$, caractérisé en ce qu'il consiste à effectuer le dégazage dans une cuve en acier ayant des chambres comportant, au-dessus du soufre liquide, au moins deux espaces réservés au gaz qui communiquent l'un avec l'autre, à envoyer le soufre dans les chambres montées en série, à amener à la première chambre, comportant l'amenée de soufre, du soufre à une température comprise entre 140 et 160 °C, à soutirer du soufre de la deuxième chambre, à le refroidir en dehors de la cuve à des températures de 120 à 135 °C, et à pulvériser le soufre liquide refroidi dans l'espace réservé au gaz de la première chambre, à laver les espaces réservés au gaz des chambres par un gaz inerte exempt d'oxygène que l'on soutire de la cuve par la première chambre, et à régler la durée de séjour du soufre dans la cuve entre 12 et 32 heures.

2. Procédé suivant la revendication 1, caractérisé en ce qu'il consiste à régler la durée de séjour du soufre dans la cuve entre 18 et 26 heures.

3. Procédé suivant les revendications 1 ou 2, caractérisé en ce qu'il consiste à utiliser comme gaz inerte un gaz consistant en 40 à 100 % en volume d'azote.

4. Procédé suivant la revendication 1 ou l'une des suivantes, caractérisé en ce qu'il consiste à utiliser comme accélérateur de dégazage de l'ammoniac, de l'air ou une amine.

5. Procédé suivant la revendication 1 ou l'une des suivantes, caractérisé en ce qu'il consiste à effectuer le dégazage dans une cuve comportant trois chambres montées en série, le soufre soutiré de la seconde chambre étant refroidi à l'extérieur de la cuve et étant pulvérisé à des températures de 120 à 135 °C dans l'espace réservé au gaz de la première chambre, et à pulvériser le soufre soutiré de la troisième chambre dans l'espace réservé au gaz de la deuxième chambre.

6. Procédé suivant la revendication 5, caractérisé en ce qu'il consiste à ajouter de l'accélérateur de dégazage également au soufre liquide de la troisième chambre.

7. Procédé suivant la revendication 1 ou l'une des suivantes, caractérisé en ce qu'il consiste à soutirer et à pulvériser le soufre pendant la durée de séjour dans la cuve de 30 à 50 fois environ.

8. Appareillage de dégazage de soufre liquide contenant de l'hydrogène sulfuré, par pulvérisation du soufre mélangé à de l'accélérateur de dégazage et par évacuation des gaz riches en $H_2S$, caractérisé par une cuve en acier ayant au moins deux chambres, deux espaces réservés au gaz au-dessus du liquide de ces chambres, une pompe pour soutirer le soufre de la deuxième chambre, un dispositif de refroidissement du soufre soutiré à l'extérieur de la cuve, un dispositif de pulvérisation dans l'espace réservé au gaz de la première chambre destiné à pulvériser le soufre provenant du dispositif de refroidissement et ayant au moins un conduit d'entrée et un conduit de sortie pour du gaz inerte, destiné à l'évacuation des gaz dégagés, riches en $H_2S$, des espaces réservés au gaz vers l'extérieur.

9. Appareillage suivant la revendication 8, caractérisé en ce que la cuve comporte trois chambres et, dans l'espace réservé au gaz de la seconde chambre, est monté un dispositif de pulvérisation destiné à pulvériser du soufre provenant de la troisième chambre.